# EUROPÄISCHE PATENTSCHRIFT

(11) **EP 1 183 501 B1**
(45) Veröffentlichungstag und Bekanntmachung des Hinweises auf die Patenterteilung: **15.10.2003**
(21) Anmeldenummer: 00929540.3
(22) Anmeldetag: 18.05.2000
(51) Int. Cl.: G01D 11/24

(54) **Seitenwand-Torsionssensor**
Sidewall-Torsionsensor
Capteur de torsion de flanc

(30) Priorität: 18.05.1999 DE 19922672
(43) Veröffentlichungstag der Anmeldung: 06.03.2002
(73) Patentinhaber: Continental Teves AG & Co. oHG, 60488 Frankfurt (DE)
(72) Erfinder: LOHBERG, Peter, D-61381 Friedrichsdorf (DE)
(86) Internationale Anmeldenummer: EP0004498
(87) Internationale Veröffentlichungsnummer: WO00070309

(56) Entgegenhaltungen:
- EP-A- 0 363 001
- DE-A- 4 021 258
- DE-A- 19 548 759
- DE-A- 19 634 715

## Beschreibung

Die vorliegende Erfindung betrifft einen SWT-Sensor gemäß dem Oberbegriff des Patentanspruchs 1.

Es soll eine Baugruppe für verschiedene sensorische Anordnungen bzw. Sensoren zur Erfassung von dynamischen Luftspaltveränderungen mit einem allgemeinen Aufbaukonzept umgesetzt werden, wobei die Baugruppe in vorteilhafter Weise Standardbauteile bzw. konfektionierte Sensoren aufweist.

Die Erfindung dient allgemein Anwendungen im Bereich des Maschinenbaus, insbesondere jedoch für Brems- bzw. Fahrdynamiksysteme in der Kfz-Industrie, und hierbei vorwiegend im Anwendungsbereich geregelter Systeme mit Bremseneingriff wie ABS und ASR. Hauptanwendungsbereich ist jedoch der Einsatz für ESP (Fahrstabilitätsregelungssysteme) und SWT ("Side Wall Torsion" bzw. Seitenwand-Torsion, bei der über Sensoren die Reifen-Seitenwand-Verformung eines Kraftfahrzeugrades zur Bestimmung von Radkräften und zur Drehzahlbestimmung gemessen und ausgewertet wird).

Es ist aus der DE-A-195 48 759 bekannt, zum Ermitteln von Reifenzustandsgrößen, wie Radlast, Beschleunigung und Drehgeschwindigkeit Dehnungsmessstreifen einzusetzen, welcher an einem radialen Verbindungssteg zwischen Reifen und Achse befestigt ist.

Aus der DE-A-40 21 258 ist ein System zur Übertragung eines Feldsensors an ein höheres Kommunikationssystem über eine Zweidraht-Leitung bekannt, welcher zur Verarbeitung von physikalischen Signalen, wie Druck, Temperatur, Durchflußrate etc. dient. Die sensierten Signale werden zunächst einem Multiplexer und dann einem A/D-Wandler zugeführt. Ein in dieser Weise aufgebauter Feldsensor ist nicht geeignet zur Verarbeitung von Signalen eines Seitenwand-Torsionssensors für Reifen, bei dem neben den magnetischen Signalen auch die Abstandsinformation ausgewertet werden muß.

Ein spezieller für SWT geeigneter Reifen bzw. ein SWT-Sensor sind aus der DE 196 20 582 A1 und DE 196 20 581 A1 bekannt. Aus dem Stand der Technik sind ferner magnetisch wirksame Maschinenelemente zur Luftspaltmodulation bekannt, bei denen prinzipiell alle permanent- oder ferromagnetischen Teile zum Einsatz kommen können, die in Abhängigkeit von einer zu messenden physikalischen Größe in Luftspaltrichtung bewegt werden. Üblicherweise werden hierzu inkrementale Encoder angewendet. Man unterscheidet zwischen ferromagnetischen und permanentmagnetischen Encodern. Ferromagnetische Encoder sind beispielsweise Zahnräder, Zahnscheiben, Zahnringe oder Lochscheiben. Bei permanetmagnetischen Encoder handelt es sich üblicherweise um ring- oder kreisförmige Anordnungen aufeinanderfolgender Nord/Südpol-Areale, eingebettet in Gummi oder einen anderen mechanischen Träger.

Wesentliche Beispiele für die Anwendung magnetisierter Encoder sind magnetisierte Radlagerdichtungen für ein ASB-System ("Aktive Sensor Bearing") zur Raddrehzahlerfassung und der oben bereits erwähnte magnetisierte Fahrzeugreifen zur Erfassung von dynamischen Kräften nach dem SWT-Prinzip (Side Wall Torsion Sensorik).

Sensorische Vorrichtungen zur Erfassung von Luftspaltmodulationen durch Encoder sind im Prinzip bekannt. Sie dienen beispielsweise auch zur Ermittlung von Kurbel- bzw. Nockenwellenstellungen bei Kfz-Motoren. In einem anderen klassischen Anwendungsfall, der Messung von Raddrehzahlen, moduliert eine inkrementale Encoderspur winkelsynchron periodisch die magnetische Feldstärke im Luftspalt zwischen zwei Festwerten. Eine zusätzliche Veränderung der Kinematik zwischen Sensor und Encoder durch dynamische Kräfte beim Fahrbetrieb und die damit zusätzlich auftretende Modulation der Feldstärke ist bei diesem Anwendungsfall unerwünscht und wird bei der Signalaufbereitung unterdrückt.

Die aus dem Stand der Technik bekannten sogenannten aktiven Sensoren zur ABS-Raddrehzahlerfassung, wie sie beispielsweise in der DE-A-196 34 715 beschrieben sind, enthalten hierzu eine interne Verstärker-/Triggerschaltung, die bewirkt, daß unabhängig von der Luftspaltdynamik stets ein Rechtecksignal mit zwei konstanten Amplitudenwerten erzeugt wird, dessen Flankenwechsel der Encoderspur folgen. Ein ABS-Raddrehzahlsensor ohne AMR-Brückenelemente zur induktiven Erfassung eines Encodersignals geht aus der EP-A-0 363 001 hervor.

In der DE 44 42 355 A1 wird beispielsweise vorgeschlagen, zur Erfassung fahrdynamischer Zustände (ESP) eines Kraftfahrzeuges, beispielsweise bei einer Kurvenfahrt, den Wert einer elastischen Achsverformung heranzuziehen und als deren Maß die Dicke des Luftspaltes zwischen einem Drehzahlsensor und dem ihm zugeordneten Encoder zu nutzen.

Aus der DE 44 35 160 A1 ist es bekannt, zur Ermittlung von Längs- und Querkräften an einem magnetisch encodierten Reifen sowohl die Phase zweier Raddrehzahlsensorsignale, als auch deren veränderliche Signalamplituden über Luftspaltverformungen zu erfassen.

Aufgabe der vorliegenden Erfindung ist es, ein für alle vorbeschriebenen Sensorarten gleichermaßen geeignetes Konzept vorzusehen, bei dem modulare Sensorbaugruppen gebildet werden, deren Grundsystem für alle Sensoren geeignet ist. Es ist ferner die Aufgabe der vorliegenden Erfindung, einen für dieses Konzept der gemeinsamen Baugruppenbildung geeigneten Sensor, insbesondere einen SWT-Sensor, zu schaffen.

Diese Aufgabe wird erfindungsgemäß durch die Merkmale des Patentanspruchs 1 gelöst.

Ein erster Erfindungsgedanke besteht darin, zukünftige SWT-Sensoren konstruktiv generell so zu gestalten, daß sie in Gehäuseabmessungen und äußerer Form mit bereits verwendeten Sensorelementen für die Herstellung aktiver ABS-Raddrehzahlfühler (konfektioniert mit Kabel und Stecker) identisch oder nahezu identisch sind. Dies bringt den Vorteil, daß zur serienmäßigen Einführung die gleichen Serienwerkzeuge verwendet werden können wie für aktive Raddrehzahlsensoren. Wegen der großen Vielfalt unterschiedlicher Serienprogramme für aktive Sensoren existiert eine Fülle bereits vorhandener unterschiedlicher Formgebungen und konstruktiver Ausbildungsformen aktiver Raddrehzahlfühler mit den zugehörigen Serienwerkzeugen, aus denen für die SWT-Sensoren stets passende Formen übernommen werden können. Der Entwicklungsaufwand wird dadurch minimiert und es entsteht der Vorteil, daß auch kleine SWT-Ausrüstungsraten wirtschaftlich bedient werden können. Dieser Grundgedanke gilt auch für zukünftige aktive Sensoren zur Raddrehzahlerfassung.

Ferner wird unter Nutzung des obigen Konzeptes eine erfindungsgemäße Anordnung beschrieben, mit der Luftspaltmodulationen jeder Art erfaßt werden können, so daß mit ihnen neben der Raddrehzahl auch Luftspaltveränderungen als Funktion von Verformungskräften gemessen werden können. Diese Sensoren sind insbesondere zur Realisierung des Side-Wall-Torsion-Konzeptes besonders geeignet, aber ebenso auch zur Umsetzung von sensorischen Systemen für ESP auf Basis der DE 44 42 355 A1.

Weitere Vorteile und bevorzugte Ausführungsformen der vorliegenden Erfindung ergeben sich aus den abhängigen Ansprüchen sowie aus der nachfolgenden Beschreibung in Zusammenhang mit den beigefügten Zeichnungen. In diesen zeigen:

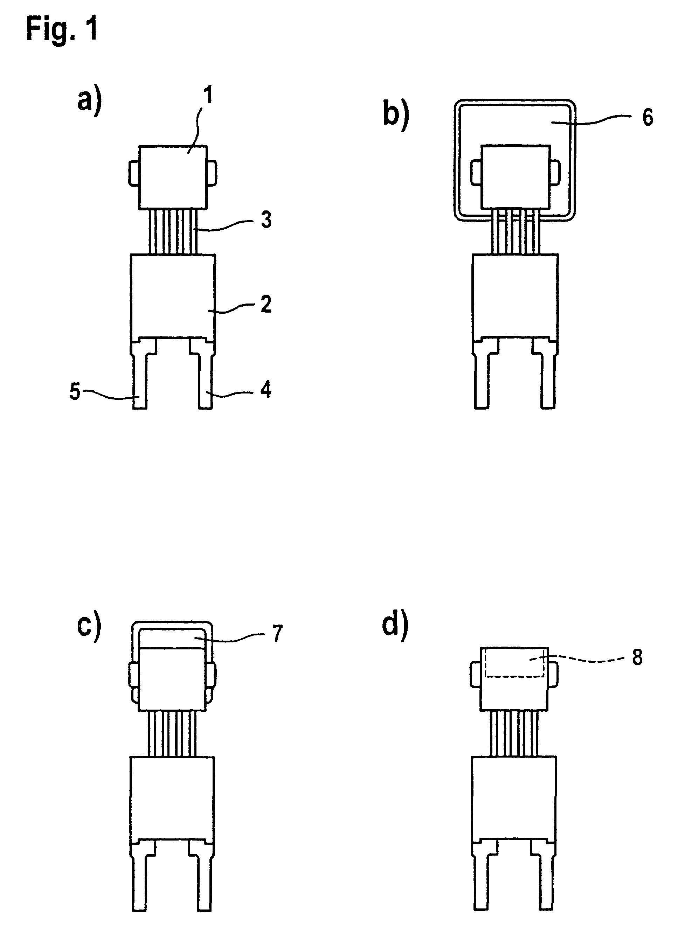

- Fig.1 a: eine Grundstruktur des erfindungsgemäßen SWT-Sensors;
- Fig.1 b-c: verschiedene Varianten von auf dem gemeinsamen Konzept bestehender Sensoren;
- Fig.2 a-b: schematische Darstellungen von Sensorschaltplänen mit Funktionsblöcken; und
- Fig.3 a-b: den Verlauf von Signalströmen J₁ und J₂ in Abhängigkeit von der Zeit.

In Zusammenhang mit den Fig. 1 a-d wird zunächst ein generelles Konzept zur standardisierten Gestaltung von Baugrup-. pen für die aktiv-sensorische Abtastung von Encodern beschrieben, die zu konfektionierten Sensoren (Fühlern) verarbeitet werden bzw. erfindungsgemäß gemeinsame modulare Baugruppen aufweisen.

Fig. 1a zeigt eine dem erfindungsgemäßen Aufbaukonzept entsprechende äußere Gehäuseform bzw. Grundstruktur eines allgemeinen Sensorelementes. Hierbei ist mit dem Bezugszeichen 1 ein insbesondere aus Plastik bestehendes Gehäuse bzw. Kopf 1 bezeichnet, in dem stets irgendein magneto-elektrisches Wandlerelement eingebettet ist. Mit 2 wird ein insbesondere aus Plastik hergestelltes Gehäuse bezeichnet, das weiterhin auch Körper 2 genannt wird. In dem Körper 2 ist stets irgendeine elektronische Signalverarbeitungsschaltung eingebettet. Der geplante Anwendungsfall bestimmt, was für ein Wandlerelement der Kopf 1 und was für eine Signalverarbeitungsschaltung der Körper 2 enthält. Zwischen Kopf 1 und Körper 2 besteht stets eine vierpolige elektrische Verbindung 3. Für eine 2-Draht-Verbindung zu einem Steuergerät dient ein Pin 4 als Signalausgang und ein Pin 5 zur Versorgung mit Betriebsspannung.

Die Figuren Fig. 1b, 1c und 1d zeigen die allgemeine Gehäuseform nach Fig. 1a kombiniert mit drei unterschiedlich großen Magneten 6, 7 und 8. Diese Magneten 6, 7 und 8 dienen zur bedarfsweisen unterschiedlichen magnetischen Vorspannung magneto-elektrischer Wandlerelemente im Kopf 1. Dem erfindungsgemäßen Gedanken des Aufbaukonzeptes folgend, sind drei unterschiedliche Magnete 6,7,8 in ihrer Baugröße festgelegt, so daß nunmehr allgemeine Aufbauvarianten existieren, deren Inhalt dem Kopf 1 oder Körper 2 dem Anwendungsfall entsprechend ausgetauscht oder angepaßt werden kann.

In einem vorteilhaften Anwendungsfall entsprechen die konstruktiven Abmessungen der Aufbauvarianten zugleich denjenigen bereits bekannter aktiver Raddrehzahlsensoren.

Ein weiterer Vorteil des erfindungsgemäßen Aufbaukonzeptes besteht darin, stets folgende vier Schnittstelleneigenschaften zu realisieren. Ein 2-Draht-Anschluß zum Steuergerät, Betrieb mit einem weiten Bereich ungeregelter Versorgungsspannung, Eingeprägter Strom als Träger des Ausgangssignales sowie eine kontinuierliche Frequenzauflösung bis zum Stillstand des Encoders.

Vorzugsweise werden dabei ausschließlich magneto-elektrischen Wandler genutzt, die auf XMR-Technologien beruhen (siehe hierzu Verlag VDI-Technologiezentrum, Düsseldorf, "Technologieanalyse Magnetismus", Band 2). Hierbei insbesondere die AMR-Technologie (Anisotroper Magnetowiderstand) und die GMR-Technologie (Riesenmagnetowiderstand).

Mit besonderem Vorteil werden die Aufbauvarianten stets wie folgt genutzt. Die Variante nach Fig. 1a in Kombination mit permanentmagnetischen Encodern, die Aufbauvariante nach Fig. 1b in Kombination mit ferromagnetischen Encodern, die Aufbauvariante nach Fig. 1c in Kombination mit ferromagnetischen Encodern und die Variante nach Fig. 1d in Kombination mit permanentmagnetischen Encodern.

Erfindungsgemäße Anwendungen des neuen Aufbaukonzeptes sind unter anderem aktive Raddrehzahlsensoren mit digitaler Offsetkompensation gemäß der Patentanmeldung DE 198 15 084 A1, bei der der Kopf 1 eine magnetoresistive Brücke und eine Barberpole-Struktur sowie ein ASIC für digitale Offsetkompensation aufweist. ASIC's sind speziell für den Anwendungsfall gestaltete integrierte Schaltkreise (IC's).

Außerdem ist die Erfindung geeignet für aktive Raddrehzahlsensoren mit Übertragung von Zusatzinformationen und einem neuartiges Datenprotokoll nach der DE 196 34 715 A1. Denkbar ist auch ein Kopf 1 mit magnetoresistiver Brücke und Barberpole-Struktur, bei der ein IC bzw. ASIC für Richtungserkennung und Luftspaltdiagnose eingesetzt werden kann.

Ein weiterer denkbarer Anwendungsfall der erfindungsgemäßen Sensorbaugruppe ist ein aktiver Sensor zur gleichzeitigen Erfassung von Raddrehzahl und dynamischer Luftspaltverformung. Ein derartiger Sensor kann mit besonderem Vorteil für ESP bzw. SWT eingesetzt werden. Da bei umfaßt der Sensor vorzugsweise einen Kopf 1 mit einer magnetoresistiven Brücke und einen Körper 2 mit einem ASIC, insbesondere des Typs UA1272. Bevorzugt ist dieser Sensor gemäß einer der Aufbauvarianten nach Fig. 1 b-d ausgestaltet.

Im folgenden wird ein derartiger erfindungsgemäßer Sensor sowie dessen Anpassung an das erfindungsgemäße Konzept der Sensorbaugruppen näher beschrieben. Die geplanten Realisierungskomponenten sind im vorstehenden Abschnitt angegeben. Die Varianten der konstruktiven Ausführung folgen der Leitlinie des erfindungsgemäß beanspruchten Aufbaukonzeptes.

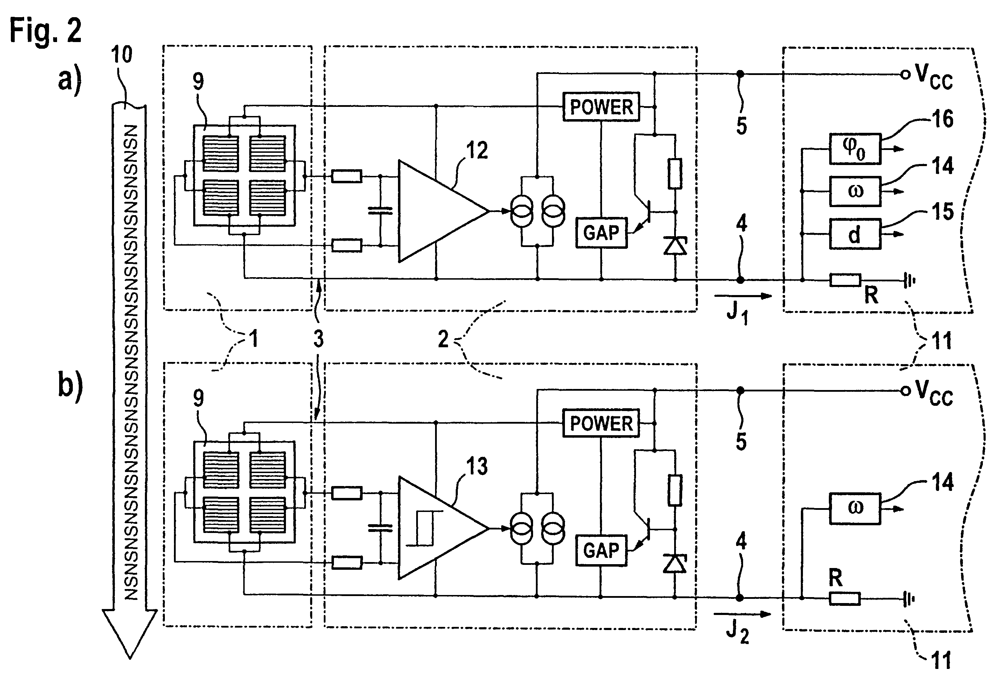

Wie bereits ausgeführt, existieren Sensorelemente für aktive Raddrehzahlsensoren, die sich in das Aufbaukonzept einordnen lassen und gegenwärtig serienmäßig in großen Stückzahlen hergestellt werden. Zu diesem Zweck zeigen Fig. 2b eine schematische Darstellung einer elektronischen Schaltung mit Funktionsblöcken eines aktiven Raddrehzahlsensors und Fig. 2a eine schematische Schaltung des erfindungsgemäßen Sensors. Beide Darstellungen zeigen zugleich die konstruktive Zuordnung der Funktionsblöcke in das übergeordnete Aufbaukonzept nach Fig. 1.

Vorzugsweise soll zur Erfassung der Luftspaltmodulationen der gleiche Kristallbaustein verwendet werden, wie er bereits als standardmäßiger Bestandteil von in großer Stückzahl hergestellten Sensorelementen für aktive ABS-Raddrehzahlfühler vorhanden ist. Das bringt den wirtschaftlichen Vorteil, an den Massenstückzahlen für aktive Raddrehzahlsensoren zu partizipieren und es entsteht der Vorteil, daß auch kleine SWT-Ausrüstungsraten wirtschaftlicher bedient werden können. Zugleich erhöht sich die produzierte Gesamtstückzahl der Kristallbausteine, die sich damit verbilligen.

Beide Köpfe 1 enthalten eine magnetoresistive Brückenschaltung 9 des gleichen Typs. Die magneto-elektrischen Wandler 9 sind über einen hier nicht dargestellten Luftspalt magnetisch an eine permanentmagnetische Encoderspur 10 gekoppelt, die insbesondere in der Seitenwand eines magnetisierten Reifens oder in einer magnetisierten Radlagerdichtung angeordnet ist. Die Köpfe 1 sind über die erwähnten vierpoligen Verbindungen 3 mit den Körpern 2 verbunden. Zum jeweiligen Steuergerät 11 besteht die oben genannte 2-Draht-Verbindung über Pin 4 und Pin 5.

Die Spannungsversorgung V_{CC} erfolgt jeweils über den Pin 5 aus einer elektrischen Steuer- bzw. Regeleinheit für das Bremssystem. Die in den Körpern 2 enthaltenen Signalverarbeitungsschaltungen unterscheiden sich durch die schematisiert dargestellten Baugruppen 12 und 13, so daß sich die Signalströme J₁ und J₂ ebenfalls signifikant unterscheiden.

Im bekannten aktiven Sensor nach Fig. 2b wird jede Amplitudenschwankung, verursacht durch dynamische Luftspaltverformungen, durch eine Verstärker- bzw. Triggerstufe 13 unterdrückt und das Signal zu einem exakten eingeprägten Rechtecksignalstrom J₂ mit zwei konstanten Amplituden geformt, so daß die übertragene Information auf die Raddrehzahl 14 beschränkt ist, die sich in der Flankenfolge abbildet.

In der erfindungsgemäßen Anordnung nach Fig. 2a befindet sich hingegen eine elektronische Schaltung 12, die das Signal analog verstärkt und aufbereitet, so daß dem Steuergerät 11 ein Signalstrom J₁ zugeführt wird, aus dem neben der Raddrehzahlinformation 14 zusätzlich die Amplitudenhöhe als Maß für die Luftspaltdicke 15 und der Phasenbezug 16 zu einem Referenzsignal entnommen werden können.

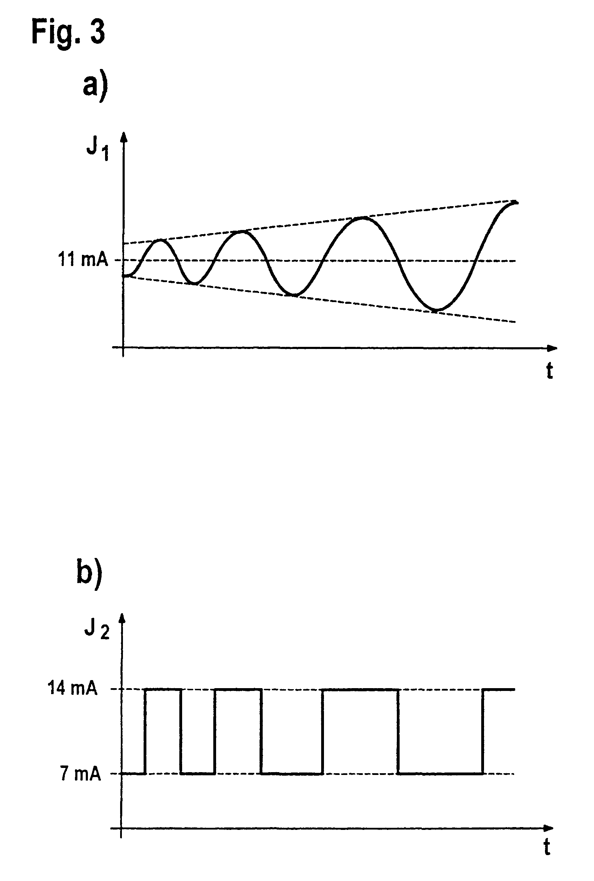

Die Fig. 3a und 3b verdeutlichen noch einmal die Unterschiede der Signalströme J₂ und J₁ zwischen dem bekannten aktiven Sensor von Fig.2b und dem erfindungsgemäßen Sensor nach Fig. 2a unter gleichen Schnittstellenbedingungen zum Encoder. Unter der hier dargestellten Annahme einer Luftspaltveränderung bilden beide Sensoren die gleiche Raddrehzahl ab, jedoch nur der erfindungsgemäße Sensor auch noch die mit der Luftspaltdicke veränderliche Amplitude.

In einer vorteilhaften Ausführungsform der Erfindung zur Realiserung eines SWT-Sensors kann die zuvor beschriebene Anordnung beispielsweise für folgende Kenngrößen ausgelegt sein:

Dazu weist der SWT-Sensor beispielsweise eine magnetische Sensitivität (Ausgangsstromamplitude/Encoderfeldstärke) von S = 0,75 mA/kA/m, einen Ausgangsstromamplitudenbereich von J = 11 mA +- 4 mA Hub, einen Terminalspannungsbereich an Pin 4 von V_{CC} = 5 bis 16 V und eine Ausgangsimpedanz von >= 10 kOhm auf.

Die magnetisierte Reifenseitenwand als Encoderspur kann beispielsweise mit einem Polmuster von 48 Nord/Süd-Polpaaren pro 360° Seitenwand und einer magnetischen Feldstärkeamplitude bei 10 mm Luftspalt von 0,8 kA/m versehen sein.

In einer vorteilhaften Ausführungsform der Erfindung zur Realisierung eines SWT-Sensors wird die sensorische Anordnung nach dem erfindungsgemäßen Aufbaukonzept unter Verwendung folgender Baugruppen realisiert. Der Kopf 1 weist eine magnetoresistive Brücke 9 auf, der Körper 2 umfaßt ein ASIC vom Typ UA1272. Bevorzugt ist der Sensor entsprechend der Bauform nach Fig. 1b, 1c oder 1d ausgeführt.

## Patentansprüche

1. Seitenwand-Torsionssensor (SWT) für Fahrzeuge, insbesondere Kraftfahrzeuge, mit einem ersten Gehäuse (1) zur Aufnahme mindestens eines Wandlerelements,
einem zweiten Gehäuse (2) zur Aufnahme einer Signalverarbeitungseinheit, **gekennzeichnet durch**
eine mindestens vierpolige Verbindung (3) zwischen dem ersten und zweiten Gehäuse, und
einem Anschluß (4, 5) des zweiten Gehäuses (2) für ein Steuergerät, wobei die im Gehäuse (2) angeordnete Signalverarbeitungseinheit als analoger Verstärker mit einem Stromausgang über Pin (4) ausgebildet ist und einen Wechselstrom mit annähernd sinusförmigem Verlauf bereitstellt.

2. SWT-Sensor nach Anspruch 1, **dadurch gekennzeichnet, dass** der Anschluß als 2-Draht-Verbindung ausgebildet ist, mit einem Pin (4) als Signalausgang und einem Pin (5) zur Versorgung mit Betriebsspannung.

3. SWT-Sensor nach Anspruch 1 oder 2, **dadurch gekennzeichnet, dass** das Wandlerelement als magneto-elektri-scher Wandler, vorzugsweise als magnetoresisive Brücke (9), ausgebildet ist.

4. SWT-Sensor nach einem der Ansprüche 1 bis 3, **dadurch gekennzeichnet, dass** das erste Gehäuse (1) Funktionselemente zur Anordnung oder Halterung von mindestens einem zur Vorspannung der magneto-elektrischen Wandlerelemente verwendeten Magnet (6, 7, 8) aufweist.

5. SWT-Sensor nach Anspruch 4, **gekennzeichnet durch** die Ausbildung als Raddrehzahlsensor.

6. SWT-Sensor nach Anspruch 4, **gekennzeichnet durch** die Ausbildung als Reifenkraftsensor.

7. SWT-Sensor nach Anspruch 4 oder 6, **gekennzeichnet durch** ein Gehäuse (1), in dem eine magnetoresistive Brücke (9) angeordnet ist, einem Gehäuse (2), in dem ein analoger Verstärker mit einem Stromausgang angeordnet ist, der einen Wechselstrom mit annähernd sinusförmigem Verlauf bereitstellt, eine mindestens vierpolige Verbindung (3) zwischen dem ersten und zweiten Gehäuse, und einen Anschluß mit einem Pin (5) und einem Pin (4), der den Stromausgang bildet.

## Claims

1. Side Wall Torsion Sensor (SWT) for vehicles, particularly motor vehicles,
with a first housing (1) for the accommodation of at least one converter element,
a second housing (2) for the accommodation of a signal processing unit,
**characterized by** an at least 4-pole connection (3) between the first and the second housing, and
a port (4,5) of the second housing for a control device,
wherein the signal processing unit arranged in housing (2) is designed as an analog amplifier with a current output via pin (4) and provides an alternating current with an approximately sinusoidal course.

2. SWT sensor according to claim 1,
**characterized in that** the port is designed as a 2-wire connection, with a pin (4) as signal output and a pin (5) for the supply of operating voltage.

3. SWT sensor according to claim 1 or 2,
**characterized in that** the converter element is designed as a magneto-electric converter, preferably as a magnetoresistive bridge (9) .

4. SWT sensor according to any one of claims 1 to 3,
**characterized in that** the first housing (1) comprises functional elements for positioning or carrying at least one magnet (6,7,8) used for pre-loading the magneto-electric converter elements.

5. SWT sensor according to claim 4,
**characterized by** a design as a wheel speed sensor.

6. SWT sensor according to claim 4,
**characterized by** a design as a tire force sensor.

7. SWT sensor according to claim 4 or 6,
**characterized by** a housing (1), in which a magnetoresistive bridge (9) is arranged, a housing (2), in which an analog amplifier is arranged having a current output that provides an alternating current with an approximately sinusoidal course, an at least 4-pole connection (3) between first and second housings, and a port with a pin (4), and a pin (5) which establishes the current output.

## Revendications

1. Capteur de torsion de paroi latérale (SWT) pour véhicule, notamment véhicule automobile, comprenant
un premier boîtier (1) servant à loger au moins un élément convertisseur,
un second boîtier (2) servant à loger une unité de traitement de signal,
**caractérisé par**
une liaison à au moins quatre pôles (3) entre le premier et le second boîtiers et
une prise (4, 5) du second boîtier (2) pour un appareil de commande, l'unité de traitement de signal disposée dans le boîtier (2) étant réalisée sous forme d'un amplificateur analogique comportant une sortie de courant au moyen d'une broche (4) et fournissant un courant alternatif à variation approximativement sinusoïdale.

2. Capteur SWT suivant la revendication 1, **caractérisé en ce que** la prise est réalisée sous forme d'une liaison à deux fils, comportant une broche (4) servant de sortie de signal et une broche (5) servant à l'alimentation en tension de fonctionnement.

3. Capteur SWT suivant la revendication 1 ou 2, **caractérisé en ce que** l'élément convertisseur est réalisé sous forme d'un convertisseur magnétoélectrique, de préférence sous forme de pont magnétorésistif (9).

4. Capteur SWT suivant l'une des revendications 1 à 3, **caractérisé en ce que** le premier boîtier (1) comporte des éléments de fonction pour l'agencement ou le maintien d'au moins d'un aimant (6, 7, 8) utilisé pour la mise sous précontrainte des éléments convertisseurs magnétoélectriques.

5. Capteur S WT suivant la revendication 4, **caractérisé par** la réalisation en tant que capteur de vitesse de rotation de roue.

6. Capteur SWT suivant la revendication 4, **caractérisé par** la réalisation en tant que capteur de force de pneumatique.

7. Capteur S WT suivant la revendication 4 ou 6, **caractérisé par** un boîtier (1), dans lequel un pont magnétorésistif (9) est disposé, un boîtier (2), dans lequel est disposé un amplificateur analogique comportant une sortie de courant qui fournit un courant alternatif à variation approximativement sinusoïdale, une liaison au moins à quatre pôles (3) entre le premier et le second boîtiers, et une prise comportant une broche (5) et une broche (4) qui constitue la sortie de courant.
